(19) Europäisches Patentamt
European Patent Office
Office européen des brevets

(11) EP 4 691 766 A1

(12) **EUROPEAN PATENT APPLICATION**
published in accordance with Art. 153(4) EPC

(43) Date of publication:
11.02.2026 Bulletin 2026/07

(21) Application number: 24780327.3

(22) Date of filing: 26.03.2024

(51) International Patent Classification (IPC):
*B32B 27/00* (2006.01)     *B32B 3/30* (2006.01)

(52) Cooperative Patent Classification (CPC):
B32B 3/30; B32B 27/00

(86) International application number:
PCT/JP2024/011984

(87) International publication number:
WO 2024/204217 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.03.2023 JP 2023050331

(71) Applicant: Toppan Holdings Inc.
Tokyo 110-0016 (JP)

(72) Inventors:
• HATTORI, Masashi
Tokyo 110-0016 (JP)
• YANAGISAWA, Takayuki
Tokyo 110-0016 (JP)
• HASE, Yota
Tokyo 110-0016 (JP)

(74) Representative: TBK
Bavariaring 4-6
80336 München (DE)

(54) **DECORATIVE SHEET**

(57) A decorative sheet that has good scratch resistance and provides a soft and supple feel is provided. In the decorative sheet (1), a surface of the surface protective layer (5) is provided with asperities including ridge portions. In a power spectrum image obtained by applying a two-dimensional fast Fourier transform to their surface shape image, when the average luminance in the spatial frequency range of 95 to 105 cycles/mm is defined as $P\_100$, the average luminance in the spatial frequency range of 195 to 205 cycles/mm is defined as $P\_200$, the average luminance in the spatial frequency range of 695 to 705 cycles/mm is defined as $P\_700$, and the ratio of the difference between $P\_100$ and $P\_700$ to the difference between $P\_200$ and $P\_700$ is defined as $Rt\_P$, the average of $Rt\_P$ is within the range of 1.57 to 1.82. The surface protective layer contains 100 parts by mass of a cured resin and 3 to 11 parts by mass of particles with an average particle size of 3 $\mu$m or more, and has a thickness of 2 to 18 $\mu$m and a gloss less than 10.

FIG.1

Processed by Luminess, 75001 PARIS (FR)

EP 4 691 766 A1

**Description**

[Technical Field]

The present invention relates to decorative sheets.

[Background Art]

Decorative sheets are used to decorate the surfaces of interior and exterior materials such as fittings, furniture, construction materials, and flooring, in other words, to impart aesthetic properties and durability to these materials. Decorative sheets are commonly used as decorative panels that are attached via an adhesive or the like to the surfaces of substrates such as wood, wood boards, metal plates, non-flammable boards, paper substrates, or resin substrates.

Aesthetic properties are imparted by forming patterns such as wood grain and stone grain using various printing methods. Plain decorative sheets without patterns are sometimes preferred. The choice of whether the sheet has a pattern and the type of pattern varies depending on the application and preference.

The gloss of the surface is also an important aesthetic property of decorative sheets. There are a variety of decorative sheets to choose from depending on the application and preference, ranging from high gloss sheets like mirror surfaces to low gloss sheets with no reflection at all.

As mentioned above, imparting durability is an important function of decorative sheets, in addition to imparting aesthetic properties. Durability is a comprehensive evaluation of scratch resistance and stain resistance, and whether they can be maintained over a long period of time. Although requirements vary depending on the environment and circumstances in which the decorative sheet is used, there is always a demand for decorative sheets with high performance.

To impart durability, typically, a surface protective layer is formed on the outermost surface of the decorative sheet. To adjust the gloss mentioned above, or to achieve low gloss in particular, it is common to add a matting agent (matting additive) to the surface protective layer.

Furthermore, decorative sheets are preferred to have processability such that they can withstand such processes as cutting and bending which are generally performed for forming decorative materials such as decorative panels.

PTL 1, for example, proposes a decorative sheet that takes into consideration aesthetic properties (low gloss), scratch resistance, and stain resistance.

[Citation List]

[Patent Literature]

[PTL 1] JP 2019-119138 A

[Summary of the Invention]

An object of the present invention is to provide a decorative sheet that has good scratch resistance and provides a soft and supple feel.

According to an aspect of the present invention, provided is a decorative sheet including: a primary film layer; and a surface protective layer provided on one surface of the primary film layer, in which a surface of the surface protective layer is provided with asperities including a plurality of ridge portions protruding in a ridge-like shape, in a power spectrum image obtained by applying a two-dimensional fast Fourier transform to a surface shape image of the asperities, when the average luminance in a spatial frequency range of 95 cycles/mm or more and 105 cycles/mm or less is defined as $P\_100$, the average luminance in a spatial frequency range of 195 cycles/mm or more and 205 cycles/mm or less is defined as $P\_200$, the average luminance in a spatial frequency range of 695 cycles/mm or more and 705 cycles/mm or less is defined as $P\_700$, and a ratio of the difference between $P\_100$ and $P\_700$ to the difference between $P\_200$ and $P\_700$ is defined as $Rt\_P$, the average value of $Rt\_P$ is within a range of 1.57 to 1.82, the surface protective layer contains a cured resin and particles, the particles have an average particle size of 3 $\mu$m or more and are contained in the surface protective layer in an amount of 3 parts by mass or more and 11 parts by mass or less, relative to 100 parts by mass of the resin, the surface protective layer has a thickness of 2 $\mu$m or more and 18 $\mu$m or less, and the surface protective layer has a gloss less than 10.

According to another aspect of the present invention, the decorative sheet according to the above aspect is provided, in which the average particle size of the particles is 3 $\mu$m or more and 11 $\mu$m or less.

According to yet another aspect of the present invention, the decorative sheet according to any one of the above aspects is provided, in which the resin is an ionizing radiation curable resin.

According to yet another aspect of the present invention, the decorative sheet according to any one of the above aspects is provided, in which the resin is an acrylate.

According to yet another aspect of the present invention, the decorative sheet according to any one of the above aspects is provided, in which the resin is a trifunctional acrylate having a repeating structure, and a number of repeat units of the repeating structure is 3 or more and 20 or less.

According to yet another aspect of the present invention, the decorative sheet according to any one of the above aspects is provided, in which the resin is a tetrafunctional acrylate having a repeating structure, and a number of repeat units of the repeating structure is 20 or more and 35 or less.

According to yet another aspect of the present invention, the decorative sheet according to any one of the above aspects is provided, further including a pattern layer between the primary film layer and the surface protective layer.

According to yet another aspect of the present invention, a decorative material is provided. The decorative material includes the decorative sheet according to any one of the above aspects, and a substrate having the decorative sheet attached thereto.

According to the present invention, a decorative sheet that has good scratch resistance and provides a soft and supple feel can be provided.

[Brief Description of the Drawings]

Fig. 1 is a cross-sectional view of a decorative material including a decorative sheet according to an embodiment of the present invention.
Fig. 2 is a cross-sectional view of a surface protective layer of the decorative sheet of Fig. 1.
Fig. 3 is a micrograph of the surface protective layer of a decorative sheet according to an example of the present invention.

[Description of the Embodiments]

With reference to the drawings, some embodiments of the present invention will be described. The embodiments described below are more specific examples of any of the aspects described above. The matters described below can be incorporated alone or in combination into each of the above aspects.

The embodiments described below are merely example configurations for embodying the technical idea of the present invention, and the technical idea of the present invention should not limit the materials, shapes, structures, and the like of the components to those described below. The technical idea of the present invention can undergo various modifications within the technical scope defined by the disclosed claims.

It should be noted that components having the same or similar functions are denoted by the same reference signs in the drawings referred to below, and redundant description is omitted. In addition, the drawings are schematic, and the relationship between dimensions in one direction and another direction, dimensions of a member and another member, and the like may be different from actual ones.

<1> Decorative material and decorative sheet

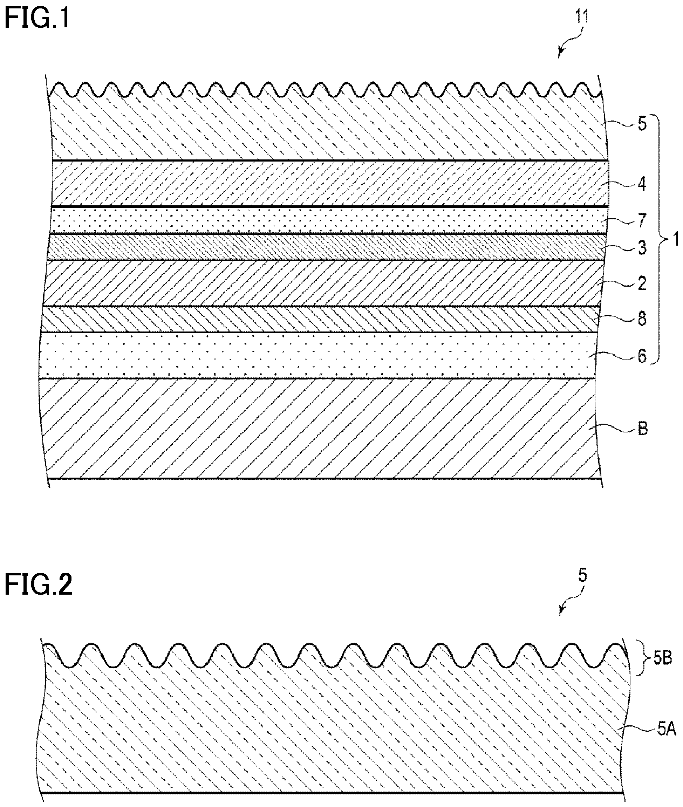

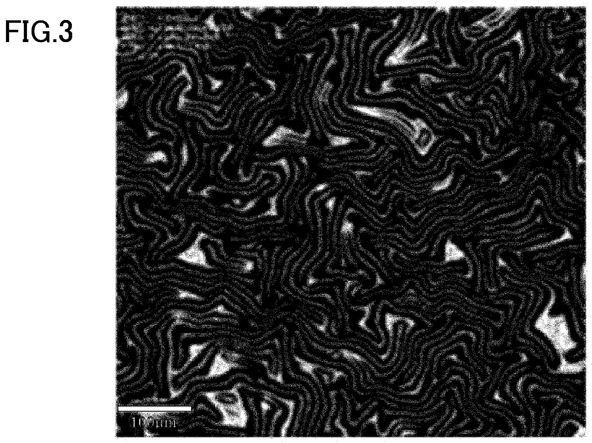

Fig. 1 is a cross-sectional view of a decorative material including a decorative sheet according to an embodiment of the present invention. Fig. 2 is a cross-sectional view of a surface protective layer of the decorative sheet of Fig. 1. Fig. 3 is a micrograph of the surface protective layer of a decorative sheet according to an example of the present invention.

Note that the cross section shown in Fig. 2 is taken along the thickness direction of the surface protective layer. The micrograph in Fig. 3 is an image in plan view captured using a laser microscope (OLS-4000 manufactured by Olympus Corporation).

A decorative material 11 shown in Fig. 1 includes a substrate B and a decorative sheet 1 attached thereto. Here, the decorative material 11 is a decorative panel. The decorative panels may be flat, bent, or folded. The decorative materials 11 may have a shape other than a plate.

The substrate B is a board material. The board material is, for example, a wood board, an inorganic board, a metal plate, or a composite board made of multiple materials. The substrate B may have a shape other than a plate.

The decorative sheet 1 includes a primary film layer 2, a pattern layer 3, a transparent resin layer 4, a surface protective layer 5, an adhesive layer 7, a primer layer 6, and a concealing layer 8. The pattern layer 3, adhesive layer 7, transparent resin layer 4, and surface protective layer 5 are provided in this order from the primary film layer 2 side on the surface of the primer film layer 2 opposite to the surface facing the substrate B. The concealing layer 8 and the primer layer 6 are provided in this order from the primary film layer 2 side on the surface of the primary film layer 2 facing the substrate B.

One or more of the pattern layer 3, the transparent resin layer 4, the primer layer 6, the adhesive layer 7, and the concealing layer 8 may be omitted. Components of the decorative sheet 1 will be explained below in order.

<1. 1> Primary film layer

The primary film layer 2 or its material may be, for example, selected from paper, synthetic resin, synthetic resin foam, rubber, nonwoven fabric, synthetic paper, metal foil, and the like. Examples of paper include tissue paper, titanium paper, and resin-impregnated paper. Examples of synthetic resins include polyethylene, polypropylene, polybutylene, polystyrene, polycarbonate, polyester, polyamide, ethylene-vinyl acetate copolymers, polyvinyl alcohol, and acrylic. Examples of rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. The nonwoven fabric may be organic or inorganic nonwoven fabric. Examples of the metal used for the metal foil include aluminum, iron, gold, and silver.

Considering printability, costs, and the like, the primary film layer 2 is preferred to have a thickness of 20 $\mu$m or more and 250 $\mu$m or less.

<1. 2> Primer layer

When an olefin-based resin is used as the material of the primary film layer 2, the surface of the primary film layer 2 is inactivated in many cases. Therefore, in such cases, the primer layer 6 is preferably provided between the primary film layer 2 and the substrate B. When the primary film layer 2 is made of an olefin-based material, in order to omit the primer layer 6 and also to improve adhesion between the primary film layer 2 and the substrate B, the primary film layer 2 may be subjected to a surface modification treatment such as corona treatment, plasma treatment, ozone treatment, electron beam treatment, ultraviolet treatment, or dichromate treatment.

Examples of the material for the primer layer 6 include those for the pattern layer 3 which will be described later. Considering that the decorative sheet 1 is taken up in a web roll form, the primer layer 6, which is provided to the rear surface of the decorative sheet 1, may additionally contain an inorganic filler to avoid blocking and improve adhesion to the adhesive. Examples of the inorganic filler include silica, alumina, magnesia, titanium oxide, and barium sulfate.

<1. 3> Concealing layer

In order to impart the decorative sheet 1 with the ability to conceal the substrate B, for example, a colored sheet is used as the primary film layer 2, or an opaque concealing layer 8 is provided. Examples of the material for the concealing layer 8 include those for the pattern layer 3 which will be described later. However, since the purpose is concealment, the pigment in the concealing layer 8 is preferred to be, for example, an opaque pigment such as titanium dioxide and iron oxide. Furthermore, in order to improve concealability, metal, such as gold, silver, copper, and aluminum, can be added to the material of the concealing layer 8. In general, aluminum flakes are often added.

<1. 4> Pattern layer

The pattern layer 3 is a layer of patterns provided to the primary film layer 2 using an ink. The ink binder may be, for example, one or a combination of two or more selected from nitrocellulose binders, cellulose binders, vinyl chloride-vinyl acetate copolymer binders, polyvinyl butyral binders, polyurethane binders, acrylic binders, polyester binders, or modified products thereof. The binder may be any of aqueous, solvent, and emulsion types, and may be of a one-part type or a two-part type that uses a curing agent. The pattern layer 3 may be formed by curing a curable ink layer by irradiating it with ultraviolet light, electron beams, or the like. The most common method among these is to use a urethane ink which is cured with an isocyanate. The ink used to form the pattern layer 3 may further contain, other than binders, a coloring agent such as a pigment and dye, an extender pigment, solvent, and various additives contained in generally used inks. Examples of highly versatile pigments include condensed azo pigments, insoluble azo pigments, quinacridone, isoindoline, anthraquinone, imidazolone, cobalt, phthalocyanine, carbon, titanium oxide, iron oxide, pearl pigments of mica, and the like.

Separate from applying an ink, various metals can be vapor-deposited or sputtered to provide patterns to the pattern layer 3. In particular, it is preferable that a photostabilizer is added to the ink. This can suppress deterioration of the decorative sheet 1 itself caused by photodegradation of the ink and can extend the life of the decorative sheet 1.

<1. 5> Adhesive layer

The adhesive layer 7 is a layer referred to as a thermal adhesive layer, anchor coat layer, or dry lamination adhesive layer.

The resin material for the adhesive layer 7 is not specifically limited, but can be appropriately selected, for example, from acrylic resins, polyester resins, polyurethane resins, epoxy resins, etc. Also, as the resin material for the adhesive layer 7, for example, an ethylene-vinyl acetate copolymer resin adhesive can also be used. The coating method can be appropriately selected depending on the viscosity of the adhesive, or the like. Generally, gravure coating is used. After forming the adhesive layer 7 on the upper surface of the pattern layer 3 by gravure coating, the transparent resin layer 4 is laminated. If a sufficient adhesive strength is obtained between the transparent resin layer 4 and the pattern layer 3, the adhesive layer 7 may be omitted.

<1. 6> Transparent resin layer

As the resin material for the transparent resin layer 4, an olefin resin is preferred to be used. Examples of the olefin resin include, besides polypropylene, polyethylene, polybutene, and the like, homopolymers or copolymers of one or more of $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), and copolymers of ethylene or an $\alpha$-olefin with other monomers, such as an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, and ethylene-butyl acrylate copolymer.

In order to improve the surface strength of the decorative sheet 1, a highly crystalline polypropylene is preferred to be used as the transparent resin layer 4. Note that various additives such as thermal stabilizer, photostabilizer, anti-blocking agent, catalyst scavenger, coloring agent, light scattering agent, and matting agent may also be added to the transparent resin layer 4. Generally, phenol-, sulfur-, phosphorus-, and hydrazine-based thermal stabilizers, and hindered amine-based photostabilizers are added in any combination.

<1. 7> Surface protective layer

The surface protective layer 5 includes a core portion 5A and a plurality of ridge portions 5B protruding in a ridge-like shape from one surface of the core portion 5A. These ridge portions 5B form asperities.

In the decorative sheet 1 according to the present embodiment, the term "ridge-like" refers to protrusions that are linear in plan view. The ridge portions 5B may be curved or straight in plan view, but are preferred to be curved from the perspective of fingerprint resistance of the decorative sheet 1. Each of the ridge portions 5B may or may not be branched in plan view. In the present disclosure, the ridge portions 5B refer to, for example, the portions from the lowest part to the tip of the asperities provided on the surface of the surface protective layer 5, and the core portion 5A refers to the portion of the surface protective layer 5 excluding the ridge portions 5B.

For example, the ridge portions 5B are curved as shown in Fig. 3, and at least some of them are adjacent to each other in the width direction. At a place where at least some of the ridge portions 5B are adjacent to each other in the width direction, in a cross section of the surface protective layer 5 parallel to the width direction and the thickness direction of the surface protective layer 5, the part with asperities has a wave shape, such as a sinusoidal shape, as shown in Fig. 2.

In a power spectrum image obtained by applying a two-dimensional fast Fourier transform to a surface shape image of the asperities on the surface protective layer 5, when the average luminance in the spatial frequency range of 95 cycles/mm or more and 105 cycles/mm or less is defined as $P\_100$, the average luminance in the spatial frequency range of 195 cycles/mm or more and 205 cycles/mm or less is defined as $P\_200$, the average luminance in the spatial frequency range of 695 cycles/mm or more and 705 cycles/mm or less is defined as $P\_700$, and the ratio of the difference between $P\_100$ and $P\_700$ to the difference between $P\_200$ and $P\_700$ is defined as $Rt\_P$, the average value of $Rt\_P$ is within the range of 1.57 to 1.82.

Here, the average value of $Rt\_P$ is a value obtained by performing the following method.

First, a surface shape image of the asperities provided on the surface of the surface protective layer 5 is obtained using a laser microscope. The luminance in this surface shape image corresponds to the height.

As the laser microscope, OLS-4000 manufactured by Olympus Corporation can be used. The surface shape image is acquired by setting the magnification of the objective lens to 10× and capturing it at a resolution of 1024 × 1024 pixels.

Next, a 756 × 756 pixel area is cut out from this surface shape image as an image subjected to a FFT. A two-dimensional fast Fourier transform is applied to this image for FFT to obtain a power spectrum image in which the strength (power) of spatial frequency components is represented by the luminance.

This power spectrum image may be rearranged so that the radial direction represents the spatial frequency. In other words, the first and third quadrants may be interchanged, and the second and fourth quadrants may be interchanged, so that the spatial frequency at the center is zero.

As the image processing software for two-dimensional fast Fourier transform and the like, for example, ImageJ (ver. 1.53f or later) can be used. Furthermore, before the two-dimensional fast Fourier transform, the original image is centered and zero-padded so as to obtain a $1024 \times 1024$ pixel image. The output power spectrum image is a 32-bit image of $1024 \times 1024$ pixels.

Next, Rt_P is obtained from the above power spectrum image as follows. First, P_100, P_200, and P_700 are calculated from the power spectrum image. P_100 is an average value obtained by extracting pixels whose spatial frequency is in the range of 95 cycles/mm or more and 105 cycles/mm or less from the power spectrum image, and dividing the sum of the luminance values of these pixels by the number of these pixels. P_200 is an average value obtained by extracting pixels whose spatial frequency is in the range of 195 cycles/mm or more and 205 cycles/mm or less from the power spectrum image, and dividing the sum of the luminance values of these pixels by the number of these pixels. P_700 is an average value obtained by extracting pixels whose spatial frequency is in the range of 695 cycles/mm or more and 705 cycles/mm or less from the power spectrum image, and dividing the sum of the luminance values of these pixels by the number of these pixels. Then, the ratio Rt_P of the difference between P_100 and P_700 to the difference between P_200 and P_700 is calculated.

The above-mentioned process of acquiring a surface shape image using a laser microscope is performed at 10 points on the same surface protective layer, and Rt_P is obtained from each of these surface shape images in the above-mentioned manner. The positions where surface shape images are acquired are selected randomly. Then, these Rt_P values are averaged to obtain the average value of Rt_P.

The average value of Rt_P is one of the characteristics of the surface protective layer 5 that affects the feel of the decorative sheet 1.

If the average value of Rt_P is within the above-mentioned range, when a user presses the surface of the surface protective layer 5 with a part of the user's body with no covering and slides the part across this surface, for example, presses the surface of the surface protective layer 5 with the user's finger and slides it across this surface, it gives the user a "soft and supple feel". In other words, since the asperities on the surface of the surface protective layer 5 of this decorative sheet 1 have a relatively gentle slope, when a user touches it in the above manner, the pressure resistance caused by the contact between the user's finger and the surface can be kept small while the contact area between the finger and the surface of the protruded portions gradually increases. This makes the user feel as if the surface of the decorative sheet is clinging to the user's finger.

On the other hand, in decorative sheets in which the average value of Rt_P exceeds the upper limit, the slope of the asperities on the surface of the surface protective layer 5 is even gentler than that of the decorative sheet 1 with a "soft and supple feel". Accordingly, when a user presses the surface of the decorative sheet with the user's finger and slides it across the surface, the pressure resistance caused by the contact between the finger and the surface is smaller, and the contact area between the finger and the surface of the protruded portions increases rapidly with pressure. Therefore, the contact area between the finger and the surface of the protruded portions becomes large as soon as the sheet is pressed, and the user does not feel the presence of the asperities. In this case, the surface of the decorative sheet feels as if it clings to the finger, and also provides better tactile smoothness compared to the "soft and supple feel" described above. Overall, the impression of the tactile smoothness is stronger. This feel can be associated with a "smooth feel".

In decorative sheets in which the average value of Rt_P is lower than the lower limit, the slope of the asperities on the surface of the surface protective layer 5 is steeper than that of the decorative sheet 1 with a "soft and supple feel". Accordingly, when a user presses the surface of the decorative sheet with the user's finger and slides it across the surface, the pressure resistance caused by the contact between the finger and the surface is large, and the contact area between the finger and the surface of the protruded portions increases gradually with pressure. Therefore, when such a decorative sheet is pressed, the contact area between the finger and the surface of the protruded portions does not increase as much as it does with decorative sheets that provide a "soft and supple feel" or a "smooth feel". Such a decorative sheet gives a feel that makes the presence of the asperities on its surface noticeable, and also provides a more grippy feel compared to the "soft and supple feel" described above. Overall, the impression of the feel that makes the asperities noticeable becomes stronger. This feel can be associated with a "rough feel".

A thickness t of the surface protective layer 5 is 2 $\mu$m or more and 18 $\mu$m or less. The thickness t of the surface protective layer 5 is preferably 3 $\mu$m or more and 10 $\mu$m or less.

The thickness of the surface protective layer 5 is the thickness of a layer that has a flat surface and the same apparent area and volume as the surface protective layer 5. The thickness of the surface protective layer 5 is determined, for example, as follows. First, a cross section that is parallel to the thickness direction of the surface protective layer 5 and perpendicular to the length direction of the ridge portions 5B is imaged. From this cross-sectional image, the dimension of the surface protective layer 5 in the width direction of the ridge portions 5B, and the area of the cross section of the surface protective layer 5 are obtained. The thickness of the surface protective layer 5 is a value obtained by dividing this area by the dimension. If the coating liquid for the surface protective layer, which will be described later, does not contain a solvent, the thickness of the coating film made of the coating liquid for the surface protective layer is equal to the thickness of the surface protective layer 5.

The average value of Rt_P tends to increase as the thickness of the surface protective layer 5 increases. Therefore, if the thickness of the surface protective layer 5 is too small or too large, it becomes difficult to achieve the "soft and supple feel". In addition, if the thickness of the surface protective layer 5 is too small, it becomes difficult to achieve low gloss.

The "soft and supple feel" can be obtained if Rt_P is within the specified range, but there is an exception. The exception occurs when the thickness of the surface protective layer 5 is too small or too large.

When the surface protective layer 5 is too thin, when a user presses the surface of the decorative sheet with the user's finger and slides it across the surface, the pressure resistance caused by the contact between the finger and the surface is smaller, and the contact area between the finger and the surface of the protruded portions increases rapidly with pressure. Therefore, the contact area between the finger and the surface of the protruded portions becomes large as soon as the sheet is pressed, and the presence of the asperities is not felt. In this case, the surface of the decorative sheet feels as if it clings to the finger, and also provides better tactile smoothness compared to the "soft and supple feel" described above. Overall, the impression of the tactile smoothness is stronger. This feel can be associated with a "smooth feel".

When the surface protective layer 5 is too thick, when a user presses the surface of the decorative sheet with the user's finger and slides it across the surface, the pressure resistance caused by the contact between the finger and the surface is large, and the contact area between the finger and the surface of the protruded portions increases gradually with pressure. Therefore, when such a decorative sheet is pressed, the contact area between the finger and the surface of the protruded portions does not increase as much as it does with decorative sheets that provide a "soft and supple feel" or a "smooth feel". Such a decorative sheet gives a feel that makes the presence of the asperities on its surface noticeable, and also provides a more grippy feel compared to the "soft and supple feel" described above. Overall, the impression of the feel that makes the asperities noticeable becomes stronger. This feel can be associated with a "rough feel".

The surface protective layer 5 contains cured resin and particles.

The resin contained in the surface protective layer 5 is preferably an ionizing radiation curable resin. Here, "ionizing radiation" refers to a charged particle beam such as an electron beam. The ionizing radiation curable resin is cured by exposure to ionizing radiation. The ionizing radiation curable resin can also be cured by exposure to ultraviolet light. The ionizing radiation curable resin used here is cured by exposure to light having a wavelength of 200 nm or less, and has a large absorption coefficient for this light.

The cured product of the ionizing radiation curable resin in the surface protective layer 5 preferably accounts for 60% by mass or more, more preferably 70% by mass or more, and even more preferably 80% by mass or more. The ionizing radiation curable resin may be any known resin, such as various monomers or commercially available oligomers, examples thereof include (meth)acrylic resins, silicone resins, polyester resins, urethane resins, amide resins, and epoxy resins. The ionizing radiation curable resin may be either an aqueous resin or a non-aqueous (organic solvent-based) resin.

The ionizing radiation curable resin preferably contains acrylate as a main component. In this context, the term main component means that the component accounts for 60% by mass or more of the ionizing radiation curable resin. The ionizing radiation curable resin preferably contains 70 parts by mass or more of acrylate, and more preferably contains 80 parts by mass or more of acrylate. It is further preferred that the ionizing radiation curable resin be acrylate.

The acrylate is preferably a di- or higher functional acrylate, and more preferably a tri- or higher functional acrylate. To obtain a surface protective layer 5 having good scratch resistance, the acrylate is preferably a tri- or higher functional acrylate. Although there is no upper limit to the number of functional groups of the acrylate, it is six or less according to one example.

The acrylate preferably has a repeating structure. This repeating structure is, for example, any one of an ethylene oxide (EO) structure, propylene oxide (PO) structure, and $\varepsilon$-caprolactone (CL) structure. The repeating structure is preferably an ethylene oxide or propylene oxide. In the acrylate, the repeating structure may be located between the acryloyl group and the methylol group when the ring is open.

The repeating structure preferably has a number of repeat units of three or more. If an acrylate having a large number of repeat units is used, the cured film tends to expand in the in-plane direction in the first irradiation step described below, increasing the risk of wrinkles corresponding to the ridge portions 5B appearing on the coating surface. Furthermore, when an acrylate having a large number of repeat units is used, the value of the ratio Rt_P tends to increase. However, when the number of repeat units is large, the cross-linking density decreases, and the scratch resistance of the surface protective layer decreases.

In a preferred mode, the ionizing radiation curable resin is a trifunctional acrylate containing a repeating structure. The trifunctional acrylate having a repeating structure is, for example, an EO-, PO-, or CL-modified trimethylolpropane triacrylate, glycerin triacrylate, isocyanurate triacrylate, or pentaerythritol triacrylate. In the case of a trifunctional acrylate having a repeating structure, the number of repeat units of the repeating structure is preferably 3 or more, more preferably 3 or more and 30 or less, and even more preferably 3 or more and 20 or less.

In another preferred mode, the ionizing radiation curable resin is a tetrafunctional acrylate containing a repeating structure. The tetrafunctional acrylate having a repeating structure is, for example, an EO-, PO-, or CL-modified pentaerythritol tetraacrylate. In the case of a tetrafunctional acrylate having a repeating structure, the number of repeat units of the repeating structure is preferably 12 or more, more preferably 12 or more and 50 or less, even more preferably 20 or more and 50 or less, and even more preferably 20 or more and 35 or less.

The number of repeat units of the repeating structure can be analyzed using MALDI-TOF-MS. The ionizing radiation curable resin may have a molecular weight distribution. If there is a molecular weight distribution, the number of repeat units is set to the number of repeat units corresponding to the molecular weight having the most intense peak in the MALDI-TOF-MS mass spectrum.

Examples of the particles contained in the surface protective layer 5 include particles of organic materials such as polyethylene (PE) wax, polypropylene (PP) wax, and resin beads, and particles of inorganic materials such as silica, glass, alumina, titania, zirconia, calcium carbonate, and barium sulfate.

The average size (D50) of the particles is 3 μm or more. The average size (D50) of the particles is preferably within the range of 3 μm or more and 11 μm or less, more preferably 4 μm or more and 10 μm or less.

When the surface protective layer 5 contains particles, wrinkles can be more uniformly formed on the coating surface in the first irradiation step described below. When the average particle size (D50) of the particles is increased, the particles are more likely to detach from the surface protective layer 5, which may make it difficult to achieve high scratch resistance. When the particles are small, the effect of generating wrinkles uniformly is small, affecting the asperities and thus making it difficult to obtain a soft and supple feel.

Here, the "average particle size" or "average particle size (D50)" is a median diameter (D50) measured by a laser diffraction/scattering particle size analyzer. When the coating liquid for the surface protective layer contains particles, the surface protective layer 5 obtained from this coating liquid also contains particles. The average size of the particles contained in the surface protective layer 5 can be determined by observing a cross section thereof and averaging the particle sizes of a plurality of particles. The value thus obtained is substantially the same as the median diameter (D50) measured by a laser diffraction/scattering particle size analyzer. Therefore, the above range of average size can also be read as the range of average size of the particles contained in the surface protective layer 5.

The surface protective layer 5 contains 3 parts by mass or more and 11 parts by mass or less of particles, relative to 100 parts by mass of the resin. The added amount of particles is preferred to be 4 parts by mass or more and 10 parts by mass or less, relative to 100 parts by mass of the resin. The term "100 parts by mass of the resin" refers to the parts by mass of the solid content of the resin.

When the added amount of particles is within the above range, the effect of forming wrinkles uniformly is particularly large. When the amount of particles added is too large, the particles are likely to detach from the surface protective layer 5, which may make it difficult to achieve high scratch resistance. When the amount of particles added is too small, it affects the asperities and makes it difficult to obtain a soft and supple feel.

The gloss of the surface protective layer 5 is less than 10. The gloss of the surface protective layer 5 is preferably 5 or less. The "gloss" is a value measured at an incidence angle of 60° using a glossmeter according to JIS Z 8741:1997.

<2> Method for producing decorative sheet

For example, the decorative sheet 1 is manufactured by the following method. For the sake of brevity, the pattern layer 3, transparent resin layer 4, primer layer 6, adhesive layer 7, and concealing layer 8 will not be explained here.

First, a coating film made of the coating liquid for the surface protective layer is formed on one surface of the primary film layer 2. This coating film can be formed by various printing methods, such as gravure printing, offset printing, screen printing, electrostatic printing, and inkjet printing, as well as various coating methods, such as roll coating, knife coating, microgravure coating, and die coating.

The surface protective layer coating liquid contains the above resin and the above particles. The coating liquid for the surface protective layer may further contain a solvent or one or more additives for improving the functionality of the final product, such as an antibacterial agent and an antifungal agent. The coating liquid for the surface protective layer may further contain another additive such as an ultraviolet absorber or a photostabilizer. Examples of the ultraviolet absorber include benzotriazole-based ultraviolet absorbers, benzoate-based ultraviolet absorbers, benzophenone-based ultraviolet absorbers, and triazine-based ultraviolet absorbers. Examples of the photstabilizer include hindered amine-based photostabilizers. Note that, according to a method described herein, a surface protective layer 5 having a low gloss can be formed without using a matting agent (matting additive).

In a second irradiation step described below, if the entire coating film made of the coating liquid for the surface protective layer is to be cured by exposure to ultraviolet light, it is preferable that the coating liquid for the surface protective layer further contains a photoinitiator. The photoinitiator is not specifically limited, but examples thereof include benzophenone-, acetophenone-, benzoin ether-, and thioxanthone-based photoinitiators.

After forming the coating film made of the coating liquid for the surface protective layer, the first irradiation step is carried out. In the first irradiation step, the coating film is irradiated with light having a wavelength of 200 nm or less (hereinafter referred to as first radiation). The ionizing radiation curable resin contained in the coating liquid for the surface protective layer has a large absorption coefficient for the first radiation. Therefore, the first radiation incident on the coating film can only reach several tens to several hundreds of nm beneath the outermost surface of the coating film. Therefore, in the first irradiation step, the crosslinking reaction proceeds in the surface region of the coating film to form an extremely thin cured film, while in the other regions the crosslinking reaction does not proceed and the other regions remain uncured.

The coating film after the first irradiation step has wrinkles on its surface corresponding to the ridge portions 5B. The present inventors consider that a reason why wrinkles are formed on the coating surface in the first irradiation step is as follows.

As described above, the first radiation incident on the coating film can only reach several tens to several hundreds of nm beneath the outermost surface of the coating film. In other words, the crosslinking reaction of the ionizing radiation curable resin occurs only on the surface of the coating film, and the regions that are more than tens to hundreds of nm away from the outermost surface are uncured and contain highly fluid molecules. Such highly fluid molecules cause the cured film to swell and thereby increase the volume of the cured film. The cured film buckles due to the in-plane compressive stress generated by the increase in volume in the in-plane direction, forming wrinkle features on the surface of the coating film.

The first irradiation light can be extracted from excimer vacuum ultra violet (VUV) light. The excimer VUV light can be produced from a noble gas lamp or noble gas halide compound lamp. When electrons having high energy are externally applied to a lamp in which a noble gas or noble gas halide compound is sealed, a large quantity of discharge plasma (dielectric barrier discharges) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar, and Kr, or a mixed gas of a noble gas and a halogen gas, such as ArBr and ArF. The wavelength (center wavelength) of the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

Considering the magnitude of photon energy to be obtained or the difference between the wavelength and the binding energy of the organics, the light source to be used is preferred to be a xenon lamp emitting excimer light with a center wavelength of 172 nm. Also, considering the cost of maintaining the equipment, availability of materials, etc., a xenon lamp is preferred to be used as a light source.

The first irradiation step is performed in an atmosphere having a low oxygen concentration. Oxygen has a large absorption coefficient for light of 200 nm or less. Therefore, the first irradiation step is preferably performed, for example, in a nitrogen gas atmosphere. The oxygen concentration in the gas phase in the first irradiation step, that is, the residual oxygen concentration in the reaction atmosphere, is preferably 2000 ppm or less, and more preferably 1000 ppm or less.

The oxygen in the atmosphere inhibits radical polymerization. Therefore, the residual oxygen concentration in the reaction atmosphere affects the formation of wrinkles on the coating surface. Therefore, when the residual oxygen concentration in the reaction atmosphere is changed, the surface properties of the surface protective layer 5 may also change.

The integrated light intensity of the first radiation is preferably 0.5 mJ/cm$^2$ or more and 200 mJ/cm$^2$ or less, more preferably 1 mJ/cm$^2$ or more and 100 mJ/cm$^2$ or less, even more preferably 3 mJ/cm$^2$ or more and 50 mJ/cm$^2$ or less, and most preferably 5 mJ/cm$^2$ or more and 30 mJ/cm$^2$ or less. If the integrated light intensity is reduced, the expansion of the cured film in the in-plane direction decreases. If the integrated light intensity is increased, the surface condition of the coating film deteriorates.

The second irradiation step is carried out after the first irradiation step is finished. In the second irradiation step, the coating film is irradiated with second radiation to cure the entire coating film. Thus, the surface protective layer 5 is obtained.

The second radiation is ionizing radiation such as an electron beam, or ultraviolet light having a longer wavelength than the first radiation. If ultraviolet light is used as the second radiation, the ultraviolet light has a wavelength at which the ionizing radiation curable resin exhibits a lower absorption coefficient.

The integrated light intensity of the second radiation is preferably 10 mJ/cm$^2$ or more and 500 mJ/cm$^2$ or less, more preferably 50 mJ/cm$^2$ or more and 400 mJ/cm$^2$ or less, and even more preferably 100 mJ/cm$^2$ or more and 300 mJ/cm$^2$ or less.

<3> Effects

The surface protective layer 5 of the decorative sheet 1 described with reference to Figs. 1 to 3 has the above-described surface properties and thickness. When a user presses the surface of the surface protective layer 5 of such a decorative sheet 1 with a part of the user's body with no covering, and slides the part across the surface, for example, presses the surface of the surface protective layer 5 with the user's finger and slides it across the surface, it gives the user a soft and supple feel. In other words, since the asperities on the surface of the surface protective layer 5 of this decorative sheet 1 have a relatively gentle slope, when a user touches it in the above manner, the pressure resistance caused by the contact between the user's finger and the surface can be kept small while the contact area between the finger and the surface of the protruded portions gradually increases. This makes the user feel as if the surface of the decorative sheet is clinging to the user's finger.

The soft and supple feel gives a sense of comfort and warmth to people who touch the decorative sheet 1. The soft and supple feel can also impart a luxurious impression to the decorative sheet 1. Therefore, the decorative sheet 1, which gives the user a supple and soft feel, is suitable for use in applications where the sheet comes into frequent contact with the user's skin or where the user's skin comes into contact with the sheet for long periods of time, such as table tops, chair armrests, and stair and corridor handrails.

Since the surface protective layer 5 of the decorative sheet 1 has the above-described surface properties, it can achieve a low gloss even when it does not contain a matting agent (matting additive). Matting agents reduce oil repellency of layers made of resin materials, and therefore fingerprints are more likely to adhere to the surface protective layer 5 if it contains one. The surface protective layer 5 containing no matting agent is less likely to absorb oil, and therefore fingerprints are less likely to remain. In addition, the surface protective layer 5 having good oil repellency is less likely to be stained with oil or to adsorb contaminants. Furthermore, when the surface protective layer 5 contains no matting agent, no particles of the matting agent become detached when its surface is scratched, so that gloss changes or scratches are less likely to be caused on the decorative sheet 1 including such a surface protective layer 5.

A reason why the surface protective layer 5 having the above surface properties can be obtained by the above method is as follows.

Oxygen in the gas phase not only absorbs short-wavelength ultraviolet light, but also inhibits radical polymerization. The effect of oxygen in the gas phase on radical polymerization is greatest in the part of the coating film made of ionizing radiation curable resin adjacent to the gas phase, and decreases with increasing distance from the coating film surface. Therefore, by changing the oxygen concentration in the gas phase in the first irradiation step, the relationship between the distance from the coating surface and the progress of the crosslinking reaction can be changed.

Changes in this relationship in turn change the thickness of the cured film formed on the surface of the coating film by the first irradiation step, and the degree of expansion of the cured film in the in-plane direction according to the progress of the crosslinking reaction. The thickness of the cured film and the degree of expansion of the cured film in the in-plane direction are also affected by the integrated light intensity in the first irradiation step. The thickness of the cured film and the degree of expansion of the cured film in the in-plane direction affect the surface properties of the surface protective layer. In addition, the particle size and added amount of particles in the coating film, and the thickness of the coating film also affect the formation of wrinkles.

Therefore, for example, by appropriately setting the composition of the ionizing radiation curable resin, the particle size and added amount of the particles, the thickness of the coating film, the oxygen concentration in the gas phase in the first irradiation step, and the integrated light intensity in the first irradiation step, it is possible to obtain a surface protective layer having desired surface properties.

Examples

The following description discusses examples of the present invention. The "particle size" in the following is the above-mentioned "average particle size (D50)".

<Example 1>

The decorative sheet 1 described with reference to Figs. 1 to 3 was produced as follows. In this example, the transparent resin layer 4, the primer layer 6, the adhesive layer 7, and the concealing layer 8 were omitted.

First, impregnated paper having a basis weight of 50 g/m$^2$ (GFR-506, manufactured by Kohjin Co., Ltd.) was prepared as the primary film layer 2. On one surface of the primary film layer 2, the pattern layer 3 was formed using oily nitrocellulose resin gravure printing inks (various colors of PCNT (PCRNT) manufactured by Toyo Ink Co., Ltd.).

After that, the surface protective layer coating liquid was applied onto the pattern layer 3. The surface protective layer coating liquid was prepared by mixing the following ionizing radiation curable resin with the following particles.

Ionizing radiation curable resin

Type: Trimethylolpropane EO-modified triacrylate (15 moles of EO added)

Product name: SR9035 (manufactured by Sartomer)
Formulation: 100 parts by mass

Particles

Product name: SYLYSIA 250N (manufactured by Fuji Silysia Chemical Ltd.)
Particle size: 5 $\mu$m
Formulation: 5 parts by mass

The coating film was formed with the surface protective layer coating liquid so that it has a thickness of 5 $\mu$m.

Subsequently, the first irradiation step was carried out. Specifically, under atmospheric pressure and in a nitrogen gas atmosphere with an oxygen concentration of 500 ppm, the surface of the coating film made of the surface protective layer coating liquid was irradiated with ultraviolet light having a wavelength of 172 nm using a Xe excimer lamp so that the integrated light intensity would be 50 mJ/cm$^2$. This created wrinkles on the surface of the coating film.

Subsequently, the second irradiation step was carried out. Specifically, the coating film was irradiated with ionizing radiation to cure it entirely and form the surface protective layer 5.

The decorative sheet 1 was thus obtained.

<Comparative Example 1>

The decorative sheet 1 was produced in the same manner as in Example 1 except for the following points. In this example, no particles were added.

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Comparative Example 2>

The decorative sheet 1 was produced in the same manner as in Example 1 except for the following points. In this example, the added amount of particles was changed to 2 parts by mass.

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 90 mJ/cm$^2$.

<Example 2>

The decorative sheet 1 was produced in the same manner as in Example 1 except for the following points. In this example, the added amount of particles was changed to 3 parts by mass.

In the first irradiation step, under atmospheric pressure and in a nitrogen gas atmosphere with an oxygen concentration of 250 ppm, the surface of the coating film made of the surface protective layer coating liquid was irradiated with ultraviolet light having a wavelength of 172 nm using a Xe excimer lamp so that the integrated light intensity would be 70 mJ/cm$^2$.

<Example 3>

The decorative sheet 1 was produced in the same manner as in Example 1 except for the following points. In this example, the added amount of particles was changed to 10 parts by mass.

In the first irradiation step, under atmospheric pressure and in a nitrogen gas atmosphere with an oxygen concentration of 750 ppm, the surface of the coating film made of the surface protective layer coating liquid was irradiated with ultraviolet light having a wavelength of 172 nm using a Xe excimer lamp so that the integrated light intensity would be 40 mJ/cm$^2$.

<Example 4>

The decorative sheet 1 was produced in the same manner as in Example 1 except for the following points. In this example, the added amount of particles was changed to 11 parts by mass.

In the first irradiation step, under atmospheric pressure and in a nitrogen gas atmosphere with an oxygen concentration of 750 ppm, the surface of the coating film made of the surface protective layer coating liquid was irradiated with ultraviolet light having a wavelength of 172 nm using a Xe excimer lamp so that the integrated light intensity would be 40 mJ/cm$^2$.

<Comparative Example 3>

The decorative sheet 1 was produced in the same manner as in Example 1 except for the following points. In this example, the added amount of particles was changed to 12 parts by mass.

In the first irradiation step, under atmospheric pressure and in a nitrogen gas atmosphere with an oxygen concentration of 750 ppm, the surface of the coating film made of the surface protective layer coating liquid was irradiated with ultraviolet light having a wavelength of 172 nm using a Xe excimer lamp so that the integrated light intensity would be 40 mJ/cm$^2$.

<Comparative Example 4>

The decorative sheet 1 was produced in the same manner as in Example 1 except for the following points. In this example, the coating film was formed with the surface protective layer coating liquid so that it has a thickness of 1 $\mu$m.

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Example 5>

The decorative sheet 1 was produced in the same manner as in Example 1 except for the following points. In this example, the coating film was formed with the surface protective layer coating liquid so that it has a thickness of 2 $\mu$m.

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 80 mJ/cm$^2$.

<Example 6>

The decorative sheet 1 was produced in the same manner as in Example 1 except for the following points. In this example, the coating film was formed with the surface protective layer coating liquid so that it has a thickness of 3 $\mu$m.

In the first irradiation step, under atmospheric pressure and in a nitrogen gas atmosphere with an oxygen concentration of 200 ppm, the surface of the coating film made of the surface protective layer coating liquid was irradiated with ultraviolet light having a wavelength of 172 nm using a Xe excimer lamp so that the integrated light intensity would be 70 mJ/cm$^2$.

<Example 7>

The decorative sheet 1 was produced in the same manner as in Example 1 except for the following points. In this example, the coating film was formed with the surface protective layer coating liquid so that it has a thickness of 10 $\mu$m.

In the first irradiation step, under atmospheric pressure and in a nitrogen gas atmosphere with an oxygen concentration of 700 ppm, the surface of the coating film made of the surface protective layer coating liquid was irradiated with ultraviolet light having a wavelength of 172 nm using a Xe excimer lamp so that the integrated light intensity would be 20 mJ/cm$^2$.

<Example 8>

The decorative sheet 1 was produced in the same manner as in Example 1 except for the following points. In this example, the coating film was formed with the surface protective layer coating liquid so that it has a thickness of 18 $\mu$m.

In the first irradiation step, under atmospheric pressure and in a nitrogen gas atmosphere with an oxygen concentration of 700 ppm, the surface of the coating film made of the surface protective layer coating liquid was irradiated with ultraviolet light having a wavelength of 172 nm using a Xe excimer lamp so that the integrated light intensity would be 10 mJ/cm$^2$.

<Comparative Example 5>

The decorative sheet 1 was produced in the same manner as in Example 1 except for the following points. In this example, the coating film was formed with the surface protective layer coating liquid so that it has a thickness of 20 μm.

In the first irradiation step, under atmospheric pressure and in a nitrogen gas atmosphere with an oxygen concentration of 700 ppm, the surface of the coating film made of the surface protective layer coating liquid was irradiated with ultraviolet light having a wavelength of 172 nm using a Xe excimer lamp so that the integrated light intensity would be 5 mJ/cm$^2$.

<Comparative Example 6>

The decorative sheet 1 was produced in the same manner as in Example 1 except for the following points. In this example, the following particles were used.

Particles

Product name: SYLYSIA 310P (manufactured by Fuji Silysia Chemical Ltd.)
Particle size: 2 μm

In the first irradiation step, under atmospheric pressure and in a nitrogen gas atmosphere with an oxygen concentration of 600 ppm, the surface of the coating film made of the surface protective layer coating liquid was irradiated with ultraviolet light having a wavelength of 172 nm using a Xe excimer lamp so that the integrated light intensity would be 40 mJ/cm$^2$.

<Example 9>

The decorative sheet 1 was produced in the same manner as in Example 1 except for the following points. In this example, the following particles were used.

Particles

Product name: SYLYSIA 420 (manufactured by Fuji Silysia Chemical Ltd.)
Particle size: 3 μm

In the first irradiation step, under atmospheric pressure and in a nitrogen gas atmosphere with an oxygen concentration of 550 ppm, the surface of the coating film made of the surface protective layer coating liquid was irradiated with ultraviolet light having a wavelength of 172 nm using a Xe excimer lamp so that the integrated light intensity would be 45 mJ/cm$^2$.

<Example 10>

The decorative sheet 1 was produced in the same manner as in Example 1 except for the following points. In this example, the following particles were used.

Particles

Product name: SYLYSIA 780 (manufactured by Fuji Silysia Chemical Ltd.)

Particle size: 11 μm

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Comparative Example 7>

The decorative sheet 1 was produced in the same manner as in Example 1 except for the following points. In this example, the following particles were used.

Particles

Product name: sicastar 43-00-154 (manufactured by Corefront)
Particle size: 14 μm

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Comparative Example 8>

The decorative sheet 1 was produced in the same manner as in Example 1 except for the following points. In this example, the following ionizing radiation curable resin was used.

Ionizing radiation curable resin

Type: Trimethylolpropane triacrylate
Product name: NK Ester A-TMPT (manufactured by SHIN-NAKAMURA CHEMICAL Co., Ltd.)

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Example 11>

The decorative sheet 1 was produced in the same manner as in Example 1 except for the following points. In this example, the following ionizing radiation curable resin was used. Ionizing radiation curable resin

Type: Trimethylolpropane EO-modified triacrylate (3 moles of EO added)
Product name: Miramer M3130 (manufactured by Miwon)

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Example 12>

The decorative sheet 1 was produced in the same manner as in Example 1 except for the following points. In this example, the following ionizing radiation curable resin was used.

Ionizing radiation curable resin

Type: Trimethylolpropane EO-modified triacrylate (6 moles of EO added)
Product name: Miramer M3160 (manufactured by Miwon)

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Example 13>

The decorative sheet 1 was produced in the same manner as in Example 1 except for the following points. In this example, the following ionizing radiation curable resin was used.

Ionizing radiation curable resin

Type: Trimethylolpropane EO-modified triacrylate (9 moles of EO added)
Product name: SR502 (manufactured by Sartomer)

In the first irradiation step, under atmospheric pressure and in a nitrogen gas atmosphere with an oxygen concentration of 200 ppm, the surface of the coating film made of the surface protective layer coating liquid was irradiated with ultraviolet light having a wavelength of 172 nm using a Xe excimer lamp so that the integrated light intensity would be 80 mJ/cm$^2$.

<Example 14>

The decorative sheet 1 was produced in the same manner as in Example 1 except for the following points. In this example, the following ionizing radiation curable resin was used.

Ionizing radiation curable resin

Type: Trimethylolpropane EO-modified triacrylate (20 moles of EO added)
Product name: NK Ester AT-20E (manufactured by SHIN-NAKAMURA CHEMICAL Co., Ltd.)

In the first irradiation step, under atmospheric pressure and in a nitrogen gas atmosphere with an oxygen concentration of 600 ppm, the surface of the coating film made of the surface protective layer coating liquid was irradiated with ultraviolet light having a wavelength of 172 nm using a Xe excimer lamp so that the integrated light intensity would be 45 mJ/cm$^2$.

<Example 15>

The decorative sheet 1 was produced in the same manner as in Example 1 except for the following points. In this example, the following ionizing radiation curable resin was used.

Ionizing radiation curable resin

Type: Ethoxylated pentaerythritol tetraacrylate (20 moles of EO added)
In the first irradiation step, under atmospheric pressure and in a nitrogen gas atmosphere with an oxygen concentration of 600 ppm, the surface of the coating film made of the surface protective layer coating liquid was irradiated with ultraviolet light having a wavelength of 172 nm using a Xe excimer lamp so that the integrated light intensity would be 45 mJ/cm$^2$.

<Example 16>

The decorative sheet 1 was produced in the same manner as in Example 1 except for the following points. In this example, the following ionizing radiation curable resin was used.

Ionizing radiation curable resin

Type: Ethoxylated pentaerythritol tetraacrylate (35 moles of EO added)
Product name: NK Ester ATM-35E (manufactured by SHIN-NAKAMURA CHEMICAL Co., Ltd.)

In the first irradiation step, under atmospheric pressure and in a nitrogen gas atmosphere with an oxygen concentration of 650 ppm, the surface of the coating film made of the surface protective layer coating liquid was irradiated with ultraviolet light having a wavelength of 172 nm using a Xe excimer lamp so that the integrated light intensity would be 40 mJ/cm$^2$.

<Comparative Example 9>

The decorative sheet 1 was produced in the same manner as in Example 1 except for the following points. In this example, the number of repeat units of the repeating structure was changed to 6, and the added amount of particles was changed to 15 parts by mass.

Ionizing radiation curable resin

Type: Trimethylolpropane EO-modified triacrylate (6 moles of EO added)
Product name: SR499 (manufactured by Sartomer)

The first irradiation step was not carried out, and the coating film made of the surface protective layer coating liquid was cured only by the second irradiation step.

<Example 17>

The decorative sheet 1 was produced in the same manner as in Example 1 except for the following points. In this example, the following ionizing radiation curable resin was used.

Ionizing radiation curable resin

Type: Ethylene glycol diacrylate (9 moles of EO added)
Product name: Light Acrylate 9EG-A (manufactured by Kyoeisha Chemical Co., Ltd.)

In the first irradiation step, under atmospheric pressure and in a nitrogen gas atmosphere with an oxygen concentration of 550 ppm, the surface of the coating film made of the surface protective layer coating liquid was irradiated with ultraviolet light having a wavelength of 172 nm using a Xe excimer lamp so that the integrated light intensity would be 40 mJ/cm$^2$.

<Comparative Example 10>

The decorative sheet 1 was produced in the same manner as in Example 1 except for the following points. In this example, the following ionizing radiation curable resin was used.

Ionizing radiation curable resin

Type: Ethoxylated dipentaerythritol hexaacrylate (12 moles of EO added)

Product name: NK Ester A-DPH-12E (manufactured by SHIN-NAKAMURA CHEMICAL Co., Ltd.)

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Comparative Example 11>

The decorative sheet 1 was produced in the same manner as in Example 1 except for the following points. In this example, the following ionizing radiation curable resin was used.

Ionizing radiation curable resin

Type: Pentaerythritol tetraacrylate
Product name: NK Ester A-TMMT (manufactured by SHIN-NAKAMURA CHEMICAL Co., Ltd.)

In the first irradiation step, under atmospheric pressure and in a nitrogen gas atmosphere with an oxygen concentration of 100 ppm, the surface of the coating film made of the surface protective layer coating liquid was irradiated with ultraviolet light having a wavelength of 172 nm using a Xe excimer lamp so that the integrated light intensity would be 100 mJ/cm$^2$.

<Evaluation>

Each of the above decorative sheets was evaluated as follows.

(1) Average value of Rt_P

For each of the above decorative sheets, the average value of Rt_P was determined in the same manner as described above.

(2) Thickness of surface protective layer

The thickness of the surface protective layer was measured in the same manner as described above. Specifically, the decorative sheet 1 was embedded in a resin such as a cold-curing epoxy resin or a UV curable resin, and the resin was allowed to fully cure. Then, this was cut so that a cross section of the decorative sheet 1 was exposed. The cross section was mechanically polished to obtain a measurement surface. After that, the cross section of the surface protective layer was imaged using the scanning electron microscope SIGMA500, manufactured by Carl Zeiss Microscopy GmbH. The imaging was carried with an acceleration voltage of 0.5 keV (low acceleration voltage), in the SE2 imaging mode, and at 2000x magnification. The measurement samples were not subjected to sputtering. Then, from this cross-sectional image, the dimension of the surface protective layer in the width direction of the ridge portions, and the area of the cross section of the surface protective layer were obtained. The "thickness t of the surface protective layer" was calculated by dividing this area by the dimension. The "thickness t of the surface protective layer" thus obtained was equal to the thickness of the coating film made of the surface protective layer coating liquid.

(3) Gloss

Gloss was measured at an incidence angle of 60 degrees using Rhopoint IQ (manufactured by Konica Minolta Co., Ltd.) The "60° gloss value" in Tables 1 to 4 below represents this gloss at 60 degrees.

(4) Tactile sensation

The tactile sensation was evaluated as follows.
First, advance preparation was carried out to so that the evaluators use the same evaluation criteria. Specifically, three standard test samples with different surface properties were prepared. While blindfolded, each of the five evaluators was asked to press the surface of each standard test sample with a finger and slide it across the surface, and then to classify the feel to the touch into one of the following three groups.

Group 1: Almost no resistance was felt when pressing, and the presence of asperities was not felt. The surface of the decorative sheet felt as if it was clinging to the finger, and also provided tactile smoothness. Overall, the impression of the tactile smoothness was strong. In other words, the sample gave a smooth feel.

Group 2: Almost no resistance was felt when pressing, but the surface of the decorative sheet felt as if it was clinging to the finger. However, the sample did not give the impression of having a smooth surface. In other words, the sample gave a soft and supple feel.

Group 3: Resistance was felt when pressing, and also the presence of asperities was felt. In other words, the sample gave a rough feel.

This was repeated until the same evaluation was made by each evaluator in at least three consecutive trials, and the evaluators' evaluations agreed for at least three consecutive trials.

After that, for each of the decorative sheets, each of the evaluators was asked to press the surface of the surface protective layer with a finger and slide it across the surface while blindfolded, and then to classify the feel to the touch into one of the above three groups. This was repeated until the same evaluation was made by each evaluator in at least three consecutive trials, and the evaluators' evaluations agreed for at least three consecutive trials. The tactile sensation was rated according to the following criteria based on the obtained results.

A (smooth): Group 1
B (soft and supple): Group 2
C (rough): Group 3

(5) Fingerprint resistance

To evaluate fingerprint resistance, fingerprint wipeability was evaluated.

Specifically, first, the 60° gloss of the surface of each decorative sheet was measured, and this 60° gloss was taken as the initial gloss. Subsequently, a fingerprint resistance evaluation liquid was adhered to each surface protective layer, and then the fingerprint resistance evaluation liquid adhered to the surface of the decorative sheet was wiped off. A higher fatty acid was used as the fingerprint resistance evaluation liquid. After that, the 60° gloss at the portion from which the fingerprint resistance evaluation liquid had been wiped off was measured, and the measured 60° gloss was taken to be a gloss after wiping.

A fingerprint wiping rate was calculated using the following formula.

$$\text{Fingerprint wiping rate (\%)} = (\text{Gloss after wiping / Initial gloss}) \times 100$$

The evaluation criteria were as follows.

AA: 70% or more and less than 250%
A: 50% or more and less than 70%, or 250% or more and less than 300%
B: Less than 50% or 300% and more

(6) Stain resistance

To evaluate the stain resistance, the stain A test specified in the Japanese Agricultural Standards (JAS) was carried out. Specifically, a line having a width of 10 mm was drawn on the surface protective layer of each decorative sheet using blue ink, black quick-drying ink, and red crayon, and the sheets were left to stand for 4 hours. Then, the lines drawn with the blue ink, black quick-drying ink, and red crayon were wiped off with a cloth wetted with ethanol.

The evaluation criteria were as follows.

AA: The colored lines could be easily wiped off.
A: Part of colored lines could be wiped off but part of them remained as stains.
B: None of colored lines could be wiped off.

(7) Scratch Resistance

Each decorative sheet was attached to a wood substrate B using a urethane adhesive. After that, a steel wool rubbing test was carried out to evaluate scratch resistance. Specifically, with a load of 100 g imposed, steel wool was reciprocated 20 times on the decorative sheet for rubbing, and scratches and gloss changes caused on the surface of the sheet were visually examined.

The evaluation criteria were as follows.

AA: No scratches or gloss changes were observed on the surface.
A: Slight scratches or gloss changes were observed on the surface.
B: Significant scratches or gloss changes were observed on the surface.

(8) Processability

Each of the obtained decorative sheets was attached to the wood substrate B using a urethane adhesive, with the surface of the decorative sheet on the primary film layer side (i.e., the rear surface of the decorative sheet) facing the wood substrate B. Then, a V-shaped groove was made up to the bonding boundary between the wood substrate B and the decorative sheet, so as not to scratch the decorative sheet.

Subsequently, the wood substrate B was bent to 90 degrees along the V-shaped groove so that the surface protective layer side-surface of the decorative sheet (i.e., the surface of the decorative sheet) would be mountain-folded. The bent portion of the surface of the decorative sheet was observed with an optical microscope to examine the occurrence of whitening or cracking to evaluate its bending formability.

The evaluation criteria were as follows.

AA: No whitening or cracking was observed.
A: Whitening was observed partly.
B: Whitening was observed on the entire surface, or cracking was observed partly.

The ratings are shown in Tables 1 to 5.

[Table 1]

| | | | Ex. 1 | Comp. Ex. 1 | Comp. Ex. 2 | Ex. 2 | Ex. 3 | Ex. 4 | Comp. Ex. 3 |
|---|---|---|---|---|---|---|---|---|---|
| First irradiation step | | | Yes | Yes | Yes | Yes | Yes | Yes | Yes |
| Surface shape | | | Ridged | Ridged | Ridged | Ridged | Ridged | Ridged | Ridged |
| Average value of Rt_P | | | 1.71 | 1.38 | 1.52 | 1.58 | 1.72 | 1.75 | 1.77 |
| Thickness ($\mu$m) | | | 5 | 5 | 5 | 5 | 5 | 5 | 5 |
| Acrylic resin | Number of functional groups | | 3 | 3 | 3 | 3 | 3 | 3 | 3 |
| | Repeating structure | Structure | C2H4O | C2H4O | C2H4O | C2H4O | C2H4O | C2H4O | C2H4O |
| | | Number of repeat units | 15 | 15 | 15 | 15 | 15 | 15 | 15 |
| Particles | Particle size ($\mu$m) | | 5 | - | 5 | 5 | 5 | 5 | 5 |
| | Added amount (parts) | | 5 | 0 | 2 | 3 | 10 | 11 | 12 |
| 60° gloss value | | | 2.4 | 3.8 | 3.3 | 3.1 | 2.4 | 2.3 | 2.2 |
| Fingerprint resistance | | | AA | AA | AA | AA | AA | A | A |
| Stain resistance | Stain A | | AA | AA | AA | AA | AA | A | B |
| Scratch resistance | Steel | | AA | AA | AA | AA | AA | A | B |
| Processability | V-cut | | AA | AA | AA | AA | AA | A | B |
| Tactile sensation | | | A | C | C | A | A | A | A |

[Table 2]

| | | | Comp. Ex. 4 | Ex. 5 | Ex. 6 | Ex. 7 | Ex. 8 | Comp. Ex. 5 |
|---|---|---|---|---|---|---|---|---|
| First irradiation step | | | Yes | Yes | Yes | Yes | Yes | Yes |
| Surface shape | | | Ridged | Ridged | Ridged | Ridged | Ridged | Ridged |
| Average value of Rt_P | | | 1.80 | 1.77 | 1.72 | 1.73 | 1.71 | 1.72 |
| Thickness (μm) | | | 1 | 2 | 3 | 10 | 18 | 20 |
| Acrylic resin | Number of functional groups | | 3 | 3 | 3 | 3 | 3 | 3 |
| | Repeating structure | Structure | C2H4O | C2H4O | C2H4O | C2H4O | C2H4O | C2H4O |
| | | Number of repeat units | 15 | 15 | 15 | 15 | 15 | 15 |
| Particles | Particle size (μm) | | 5 | 5 | 5 | 5 | 5 | 5 |
| | Added amount (parts) | | 5 | 5 | 5 | 5 | 5 | 5 |
| 60° gloss value | | | 9.5 | 7.8 | 4.8 | 1.2 | 1.1 | 1.0 |
| Fingerprint resistance | | | AA | AA | AA | AA | AA | AA |
| Stain resistance | Stain A | | AA | AA | AA | AA | AA | AA |
| Scratch resistance | Steel | | A | AA | AA | AA | AA | AA |
| Processability | V-cut | AA | | AA | AA | AA | A | A |
| Tactile sensation | | B | | A | A | A | A | C |

[Table 3]

| | | | Comp. Ex. 6 | Ex. 9 | Ex. 10 | Comp. Ex. 7 |
|---|---|---|---|---|---|---|
| First irradiation step | | | Yes | Yes | Yes | Yes |
| Surface shape | | | Ridged | Ridged | Ridged | Ridged |
| Average value of Rt_P | | | 1.53 | 1.62 | 1.82 | 1.86 |
| Thickness (μm) | | | 5 | 5 | 5 | 5 |
| Acrylic resin | Number of functional groups | | 3 | 3 | 3 | 3 |
| | Repeating structure | Structure | C2H4O | C2H4O | C2H4O | C2H4O |
| | | Number of repeat units | 15 | 15 | 15 | 15 |
| Particles | Particle size (μm) | | 2 | 3 | 11 | 14 |
| | Added amount (parts) | | 5 | 5 | 5 | 5 |
| 60° gloss value | | | 2.5 | 2.4 | 1.9 | 1.7 |
| Fingerprint resistance | | | AA | AA | A | A |
| Stain resistance | Stain A | | AA | AA | A | A |
| Scratch resistance | Steel | | AA | AA | A | B |
| Processability | V-cut | | AA | AA | A | A |
| Tactile sensation | | | C | A | A | A |

[Table 4]

| | Comp. Ex. 8 | Ex. 11 | Ex. 12 | Ex. 13 | Ex. 14 | Ex. 15 | Ex. 16 |
|---|---|---|---|---|---|---|---|
| First irradiation step | Yes | Yes | Yes | Yes | Yes | Yes | Yes |

(continued)

|  |  | Comp. Ex. 8 | Ex. 11 | Ex. 12 | Ex. 13 | Ex. 14 | Ex. 15 | Ex. 16 |
|---|---|---|---|---|---|---|---|---|
| Surface shape |  | Asperities caused by particles | Ridged | Ridged | Ridged | Ridged | Ridged | Ridged |
| Average value of Rt_P |  | 2.14 | 1.60 | 1.62 | 1.65 | 1.66 | 1.62 | 1.76 |
| Thickness ($\mu$m) |  | 5 | 5 | 5 | 5 | 5 | 5 | 5 |
| Acrylic resin | Number of functional groups | 3 | 3 | 3 | 3 | 3 | 4 | 4 |
|  | Repeating structure — Structure | No | C2H4O | C2H4O | C2H4O | C2H4O | C2H4O | C2H4O |
|  | Repeating structure — Number of repeat units | 0 | 3 | 6 | 9 | 20 | 20 | 35 |
| Particles | Particle size ($\mu$m) | 5 | 5 | 5 | 5 | 5 | 5 | 5 |
|  | Added amount (parts) | 5 | 5 | 5 | 5 | 5 | 5 | 5 |
| 60° gloss value |  | 14 | 3.9 | 3.5 | 3.1 | 2.3 | 8.8 | 2.2 |
| Fingerprint resistance |  | B | AA | AA | AA | AA | AA | AA |
| Stain resistance | Stain A | AA | AA | AA | AA | AA | AA | AA |
| Scratch resistance | Steel | AA | AA | AA | AA | A | AA | A |
| Processability | V-cut | B | A | AA | AA | AA | A | AA |
| Tactile sensation |  | B | A | A | A | A | A | A |

[Table 5]

|  |  | Comp. Ex. 9 | Ex. 17 | Comp. Ex. 10 | Comp. Ex. 11 |
|---|---|---|---|---|---|
| First irradiation step |  | No | Yes | Yes | Yes |
| Surface shape |  | Asperities caused by particles | Ridged | Asperities caused by particles | Asperities caused by particles |
| Average value of Rt_P |  | 1.21 | 1.64 | 2.23 | 2.15 |
| Thickness ($\mu$m) |  | 5 | 5 | 5 | 5 |
| Acrylic resin | Number of functional groups | 3 | 2 | 6 | 4 |
|  | Repeating structure — Structure | C2H5O | C2H5O | C2H5O | No |
|  | Repeating structure — Number of repeat units | 6 | 9 | 12 | 0 |
| Particles | Particle size ($\mu$m) | 5 | 5 | 5 | 5 |
|  | Added amount (parts) | 15 | 5 | 5 | 5 |
| 60° gloss value |  | 10 | 3.0 | 12 | 18 |
| Fingerprint resistance |  | B | AA | B | B |
| Stain resistance | Stain A | B | AA | AA | AA |
| Scratch resistance | Steel | B | A | AA | AA |
| Processability | V-cut | AA | AA | B | B |
| Tactile sensation |  | C | A | B | B |

As shown in Tables 1 to 5, the decorative sheets according to Examples 1 to 17 gave the evaluators a soft and supple feel to the touch. The decorative sheets according to Examples 1 to 17 had low gloss and good fingerprint resistance, stain resistance, scratch resistance, and processability.

As shown in Table 1, Comparative Example 3 gave the evaluators a soft and supple feel and had low gloss, but exhibited inferior stain resistance, scratch resistance, and processability. As shown in Table 3, Comparative Example 7 gave the evaluators a soft and supple feel but exhibited inferior scratch resistance.

On the other hand, as shown in Tables 1 to 3 and 5, Comparative Examples 1, 2, 5, 6, and 9 did not give the evaluators a soft and supple feel, but rather a rough feel. As shown in Tables 2, 4, and 5, Comparative Examples 4, 8, 10, and 11 did not give the evaluators a soft and supple feel, but rather a smooth feel.

[Reference Signs List]

1    Decorative sheet
2    Primary film layer
3    Pattern layer
4    Transparent resin layer
5    Surface protective layer
6    Primer layer
7    Adhesive layer
8    Concealing layer
11    Decorative material
B    Substrate

**Claims**

1.  A decorative sheet comprising: a primary film layer; and a surface protective layer provided on one surface of the primary film layer,

    wherein a surface of the surface protective layer is provided with asperities including a plurality of ridge portions protruding in a ridge-like shape,
    in a power spectrum image obtained by applying a two-dimensional fast Fourier transform to a surface shape image of the asperities, when the average luminance in a spatial frequency range of 95 cycles/mm or more and 105 cycles/mm or less is defined as $P\_100$, the average luminance in a spatial frequency range of 195 cycles/mm or more and 205 cycles/mm or less is defined as $P\_200$, the average luminance in a spatial frequency range of 695 cycles/mm or more and 705 cycles/mm or less is defined as $P\_700$, and a ratio of the difference between $P\_100$ and $P\_700$ to the difference between $P\_200$ and $P\_700$ is defined as $Rt\_P$, the average value of $Rt\_P$ is within a range of 1.57 to 1.82,
    the surface protective layer contains a cured resin and particles, the particles have an average particle size of 3 $\mu$m or more and are contained in the surface protective layer in an amount of 3 parts by mass or more and 11 parts by mass or less, relative to 100 parts by mass of the resin,
    the surface protective layer has a thickness of 2 $\mu$m or more and 18 $\mu$m or less, and
    the surface protective layer has a gloss less than 10.

2.  The decorative sheet according to claim 1, wherein the average particle size of the particles is 3 $\mu$m or more and 11 $\mu$m or less.

3.  The decorative sheet according to claim 1 or 2, wherein the resin is an ionizing radiation curable resin.

4.  The decorative sheet according to any one of claims 1 to 3, wherein the resin is an acrylate.

5.  The decorative sheet according to any one of claims 1 to 4, wherein the resin is a trifunctional acrylate having a repeating structure, and a number of repeat units of the repeating structure is 3 or more and 20 or less.

6.  The decorative sheet according to any one of claims 1 to 4, wherein the resin is a tetrafunctional acrylate having a repeating structure, and a number of repeat units of the repeating structure is 20 or more and 35 or less.

7. The decorative sheet according to any one of claims 1 to 6, further comprising a pattern layer between the primary film layer and the surface protective layer.

8. A decorative material comprising:

the decorative sheet according to any one of claims 1 to 7; and
a substrate having the decorative sheet attached thereto.

**FIG.1**

**FIG.2**

FIG.3

## INTERNATIONAL SEARCH REPORT

| International application No. |
|---|
| **PCT/JP2024/011984** |

| A. | CLASSIFICATION OF SUBJECT MATTER |
|---|---|

*B32B 27/00*(2006.01)i; *B32B 3/30*(2006.01)i
FI:  B32B27/00 E; B32B3/30

According to International Patent Classification (IPC) or to both national classification and IPC

| B. | FIELDS SEARCHED |
|---|---|

Minimum documentation searched (classification system followed by classification symbols)

B32B27/00; B32B3/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/145137 A1 (TOPPAN PRINTING CO., LTD.) 07 July 2022 (2022-07-07) claims, paragraph [0056], examples, fig. 1 | 1-8 |
| X | WO 2022/239270 A1 (TOPPAN PRINTING CO., LTD.) 17 November 2022 (2022-11-17) claims, paragraph [0057], examples, fig. 1 | 1-8 |
| A | WO 2022/054645 A1 (DAI NIPPON PRINTING CO., LTD.) 17 March 2022 (2022-03-17) entire text | 1-8 |
| A | JP 2021-53996 A (DAI NIPPON PRINTING CO., LTD.) 08 April 2021 (2021-04-08) entire text | 1-8 |
| A | JP 2020-111715 A (MITSUBISHI CHEMICAL CORPORATION) 27 July 2020 (2020-07-27) entire text | 1-8 |
| A | WO 2023/282295 A1 (TOPPAN PRINTING CO., LTD.) 12 January 2023 (2023-01-12) examples 15-16 | 1-8 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/011984**

| Patent document cited in search report | | | Publication date (day/month/year) | Patent family member(s) | | | Publication date (day/month/year) |
|---|---|---|---|---|---|---|---|
| WO | 2022/145137 | A1 | 07 July 2022 | US | 2023/0025597 | A1 | |
| | | | | claims, paragraph [0100], examples, fig. 1 | | | |
| | | | | EP | 4101640 | A1 | |
| | | | | CN | 115243889 | A | |
| | | | | KR | 10-2023-0127867 | A | |
| WO | 2022/239270 | A1 | 17 November 2022 | US | 2023/0146524 | A1 | |
| | | | | claims, paragraph [0102], examples, fig. 1 | | | |
| | | | | EP | 4116095 | A1 | |
| | | | | CN | 115623867 | A | |
| | | | | KR | 10-2024-0007054 | A | |
| WO | 2022/054645 | A1 | 17 March 2022 | US | 2023/0364640 | A1 | |
| | | | | EP | 4212579 | A1 | |
| | | | | CN | 116323766 | A | |
| JP | 2021-53996 | A | 08 April 2021 | (Family: none) | | | |
| JP | 2020-111715 | A | 27 July 2020 | JP | 2023-143995 | A | |
| WO | 2023/282295 | A1 | 12 January 2023 | CN | 117545630 | A | |
| | | | | KR | 10-2024-0031961 | A | |

Form PCT/ISA/210 (patent family annex) (July 2022)

**EP 4 691 766 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A